# EUROPEAN PATENT SPECIFICATION

(11) **EP 3 620 541 B1**
(45) Date of publication and mention of the grant of the patent: **06.10.2021**
(21) Application number: 17908116.1
(22) Date of filing: 09.06.2017
(51) Int. Cl.: C21C 5/35, C21C 5/38, C21C 5/40, C21C 7/064

(54) **METHOD AND APPARATUS FOR HIGH-EFFICIENCY DEPHOSPHORIZATION BY MASS-ENERGY CONVERSION CYCLING AND MULTI-COMPONENT BLOWING FOR DEPHOSPHORIZATION CONVERTER GAS**
VERFAHREN UND VORRICHTUNG ZUR HOCHEFFIZIENTEN ENTPHOSPHORISIERUNG DURCH MASSENENERGIEUMWANDLUNGSZYKLIEREN UND MEHRKOMPONENTENBLASEN FÜR ENTPHOSPHORIERUNGSKONVERTERGAS
PROCÉDÉ ET APPAREIL DESTINÉS À LA DÉPHOSPHORATION À HAUT RENDEMENT PAR CYCLE DE CONVERSION D'ÉNERGIE DE MASSE ET SOUFFLAGE À PLUSIEURS CONSTITUANTS DESTINÉS À UN GAZ DE CONVERTISSEUR DE DÉPHOSPHORATION

(30) Priority: 02.05.2017 CN 201710301930
(43) Date of publication of application: 11.03.2020
(73) Proprietor: University of Science & Technology Beijing, Haidian District Beijing 100083 (CN); Xi'an University of Architecture and Technology, Xi'an, Shaanxi 710055 (CN)
(72) Inventor: ZHU, Rong, Beijing 100083 (CN); LV, Ming, Beijing 100083 (CN); WANG, Xueliang, Beijing 100083 (CN); WU, Wenhe, Beijing 100083 (CN)
(74) Representative: Gille Hrabal Partnerschaftsgesellschaft mbB Patentanwälte
(86) International application number: PCT/CN2017/087812
(87) International publication number: WO 2018/201552

(56) References cited:
- WO-A1-2005/093106
- CN-A- 1 664 118
- CN-A- 101 818 227
- CN-A- 104 928 439
- CN-U- 201 809 374
- JP-A- S55 104 416
- SU-A2- 1 032 023
- US-A- 3 772 000
- US-A- 3 998 626
- US-A- 4 561 637

## Description

### Field

The invention belongs to the field of the ferrous metallurgy technology and energy conservation and emission reduction, in particular to a dephosphorization pretreatment aspect of steelmaking, and particularly relates to a method and device for applying mass-energy conversion recycling of 30-350 ton dephosphorization converter gas to diversified top blowing and bottom blowing in a dephosphorization process to realize efficient dephosphorization and recycling of gas resources in a duplex steelmaking process.

### Background

Dephosphorization in converter steelmaking is mainly carried out at a low temperature in the early smelting stage. If the oxygen supply flow is large, the dephosphorization reaction tends to be limited by the thermodynamic conditions of rapid temperature rise in a molten pool after a desiliconization reaction, resulting in difficulty in controlling the temperature in the blowing process and unstability in dephosphorization rate. If the oxygen supply flow is small, the stirring dynamic conditions in the molten pool are poor. In order to produce high-quality steel, enterprises including Japan's Nippon Steel, China's Baosteel, Shougang Jingtang Company adopt a converter duplex smelting process, in a duplex steelmaking dephosphorization converter, in order to control the temperature of the molten pool, low-flow oxygen supply for slag formation is usually used to control the temperature, so as to realize efficient dephosphorization, however, the stirring dynamic conditions in the dephosphorization converter are poor, and slag foaming is caused by serious steel liquid peroxidation, which limits the dephosphorization speed and efficiency. If the stirring capacity of the molten pool in the dephosphorization process can be improved, the dephosphorization rate will be improved.

Every ton of steel produced by the dephosphorization converter may result in 20-40 m³ of coal gas, which contains 5%-30% of CO, 10%-30% of CO₂, and the rest mainly N₂ and a small amount of O₂. Due to the low calorific value of dephosphorization converter gas, it has no recycling economic values, at present, domestic and foreign iron and steel enterprises all adopt emission treatment, which not only wastes resources and energy, but also pollutes the environment. If the mass-energy conversion of the dephosphorization converter gas can be applied to the smelting process of the dephosphorization converter as a way of resource recycling, it will strengthen the dynamic conditions of dephosphorization, improve the dephosphorization rate and reduce the exhaust emission. US 3 772 000 A discloses a method for converting solid ferrous metal to steel. US 4 561 637 A describes an apparatus for heating a steel bath utilizing converter waste gas. WO 2005/093106 A1 discloses a method for dephosphorization of hot metal using a hot metal pretreatment vessel.

### Summary

In order to solve the above problems, the invention provides a method and device for mass-energy conversion recycling of dephosphorization converter gas for diversified blowing so as to realize efficient dephosphorization in a converter duplex steelmaking process. Mass-energy conversion of the dephosphorization converter gas is realized in a combustion mode, the strong stirring and temperature control effects of N₂ and CO₂ in the mass-energy converted gas are utilized to provide good thermodynamic and dynamic conditions for a dephosphorization reaction, thus realizing the recycling of the dephosphorization converter gas after mass-energy conversion, and achieving the purpose of efficient dephosphorization.

The invention is realized through the following technical solution:
A method for mass-energy conversion recycling of dephosphorization converter gas for diversified blowing so as to realize efficient dephosphorization is provided in appended claim 1.

Further, the gas flow rates in different smelting stages are different when the mass-energy converted gas is used for blowing dephosphorization, specifically:
In the early stage of blowing, the temperature rise of a molten pool due to an oxidation reaction is beneficial to slagging, the top blowing mass-energy converted gas intensity is 0-0.5 Nm³/min/t, the top blowing O₂ intensity is 1.0-2.5 Nm³/min/t, and the bottom blowing mass-energy converted gas intensity is 0.05-0.3 Nm³/min/t;

In the middle stage of blowing, the intensity of the mass-energy converted gas is increased, the dephosphorization temperature is controlled and stirring is strengthened, the top blowing mass-energy converted gas intensity is 0.2-1.0 Nm³/min/t, the top blowing O₂ intensity is 0.8-1.8 Nm³/min/t, and the bottom blowing mass-energy converted gas intensity is 0.1-0.5 Nm³/min/t;

In the later stage of blowing, the temperature and composition of the molten pool are uniformized, further dephosphorization is carried out, the top blowing mass-energy converted gas intensity is 0.1-0.6 Nm³/min/t, the top blowing O₂ intensity is 1.0-2.0 Nm³/min/t, and the bottom blowing mass-energy converted gas intensity is 0.05-0.4 Nm³/min/t;

During charging, tapping and waiting, the top blowing mass-energy converted gas is stopped, and the bottom blowing mass-energy converted gas intensity is 0.03-0.15 Nm³/min/t, so as to protect bottom blowing elements. The combustion improver is O₂, and the consumption of the combustion improver changes with the content of CO in the gas emitted from the dephosphorization converter, and in order to ensure sufficient mass-energy conversion of the gas, the flow ratio of 02:CO should be kept at 0.5-1.5:1.

Further, during the mixing process of the mass-energy converted gas and oxygen, the pressure of the mass-energy converted gas is guaranteed to be 0.01-0.5 MPa higher than the pressure of oxygen.

Further, the emitted gas after cooling and dedusting is combusted in a combustion chamber, the combustion chamber comprises a combustion improver nozzle and an ignition device, a lining of the combustion chamber is made of a refractory material, a housing is an evaporative cooling pipeline, and the evaporative cooling pipeline is connected with a steam drum to recover the heat generated in the combustion process.

Further, the mass-energy converted gas can be provided to nitrogen sealing pipelines of the top blowing system, a dedusting system and a charging system of the converter, completely replacing N₂ for sealing of a top blowing spray gun, a dedusting smoke hood and a charging system unit of the dephosphorization converter, to prevent air from entering a flue.

A device for mass-energy conversion recycling of dephosphorization converter gas for diversified blowing so as to realize efficient dephosphorization is provided. The device comprises a dephosphorization converter for duplex steelmaking, a first cooling device, a dedusting device and an emission chimney; the dephosphorization converter for duplex steelmaking is connected with the cooling device, the dedusting device is connected with the cooling device, and the emission chimney is connected with the dedusting device; the dephosphorization converter for duplex steelmaking comprises a top blowing system and a bottom blowing system; the top blowing system and the bottom blowing system respectively blow top blowing gas and bottom blowing gas from the top and bottom of the converter to realize dephosphorization, and the gas generated in the dephosphorization process sequentially passes through the cooling device and the dedusting device for cooling and dedusting, and then enters a pipeline in front of the emission chimney;

The device further comprises a combustion chamber, a second cooling device, a compressor, a buffer device and a mixing device;

An air inlet of the combustion chamber is connected with a pipeline between the dedusting device and the emission chimney;

An air outlet of the combustion chamber is connected with the second cooling device;

The second cooling device, the compressor and the buffer device are sequentially connected; The buffer device is provided with two outlets, wherein one outlet is connected with the bottom blowing system and the other outlet is connected with an inlet of the mixing device;

The inlet of the mixing device is also connected with an oxygen supply device;

The mixing device is connected with the top blowing system;

The cooled and dedusted gas enters the combustion chamber, the CO component in the emitted gas is combusted and converted into CO₂ to obtain mass-energy converted gas, the mass-energy converted gas enters the buffer device after being cooled and pressurized, then part of the mass-energy converted gas enters the bottom blowing system of the dephosphorization converter as bottom blowing gas, and the other part enters the top blowing system of the dephosphorization converter as top blowing gas after being mixed with oxygen.

Further, the combustion chamber comprises a combustion improver nozzle and an ignition device, a lining of the combustion chamber is made of a refractory material, a housing is an evaporative cooling pipeline, and the evaporative cooling pipeline is connected with a steam drum to recover the heat generated in the combustion process.

Further, a gas analyzer is arranged at an air outlet of the combustion chamber.

Furthermore, a gas analyzer is arranged in the dedusting device.

The invention has the beneficial technical effects that: the method is suitable for a 30-350 ton dephosphorization converter, and the mass-energy conversion amount of gas per ton of steel is 10-50 Nm³; meanwhile, by means of the evaporative cooling device of the combustion chamber, 5-20 kg of steam can be recovered; and the strong stirring and temperature control effects of N₂ and CO₂ provide good thermodynamic and dynamic conditions for the dephosphorization converter, thereby improving the dephosphorization rate by 5% or above.

### Brief Description of the Drawings

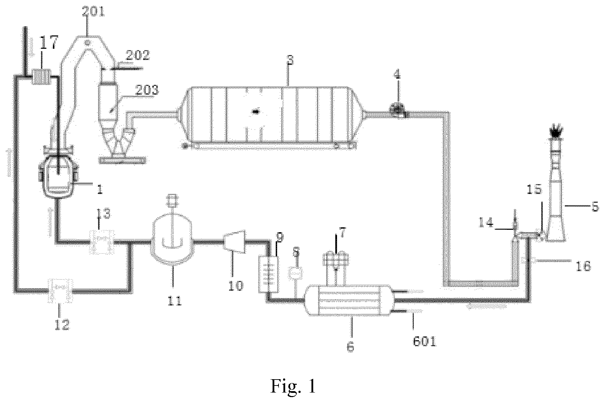

Fig. 1 is a schematic diagram of a device for mass-energy conversion recycling of dephosphorization converter gas for diversified blowing so as to realize efficient dephosphorization;

Wherein, 1. converter, 201. evaporative cooling flue, 202. cooler nozzle, 203. evaporative cooler, 3. electrostatic precipitator, 4. fan, 5. emission chimney, 6. combustion chamber, 601. combustion improver device nozzle, 7. steam recovery device, 8. gas analyzer, 9. gas cooler, 10. compressor, 11. buffer device, 12. top blowing system, 13. bottom blowing system, 14. emission-side bell-shaped valve, 15. first switching valve, 16. second switching valve, and 17. mixing device.

### Detailed Description of the Embodiments

In order to make the object, technical solution and advantages of the invention clearer, the invention will be described in further detail below with reference to the drawings and embodiments. It should be understood that the specific embodiments described herein are only used to illustrate the invention and are not used to limit the invention.

On the contrary, the present invention covers any alternatives, modifications, equivalent methods and solutions defined by the claims within the spirit and scope of the present invention. Further, in order to enable the public to have a better understanding of the present invention, in the following detailed description of the present invention, some specific details are described. It will be apparent to those skilled in the art that the present invention can be fully understood without the description of these details.

### Embodiment 1

A method for mass-energy conversion recycling of dephosphorization converter gas for diversified blowing so as to realize efficient dephosphorization is provided, and the method comprises the steps:
In a dephosphorization converter for duplex steelmaking, conducting cooling and dedusting on the gas emitted by the dephosphorization converter, and then burning the gas in a combustion chamber by using a combustion improver to convert the CO component in the gas into CO₂, wherein the combustion chamber comprises a combustion improver nozzle and an ignition device, a lining of the combustion chamber is made of a refractory material, a housing is an evaporative cooling pipeline, and the evaporative cooling pipeline is connected with a steam drum to recover the heat generated in the combustion process, so that mass-energy conversion of the dephosphorization converter gas is realized to obtain mass-energy converted gas; and after cooling and pressurization, making part of the mass-energy converted gas enter a bottom blowing system of the dephosphorization converter as bottom blowing gas to realize bottom blowing stirring of the mass-energy converted gas, and the other part enter a top blowing system of the dephosphorization converter as top blowing gas after being mixed with oxygen, so as to realize diversified gas O₂-N₂-CO₂ blowing dephosphorization, as a replacement for the existing way of top blowing part of O₂ and bottom blowing Ar/N₂ into the dephosphorization converter, thereby realizing recycling of the converted gas for efficient dephosphorization.

The gas flow rates in different smelting stages are different when the mass-energy converted gas is used for blowing dephosphorization, specifically:
In the early stage of blowing, the temperature of a molten pool rises due to an oxidation reaction for slagging, the top blowing mass-energy converted gas intensity is 0-0.5 Nm³/min/t, the top blowing O₂ intensity is 1.0-2.5 Nm³/min/t, and the bottom blowing mass-energy converted gas intensity is 0.05-0.3 Nm³/min/t;

In the middle stage of blowing, the intensity of the mass-energy converted gas is increased, the dephosphorization temperature is controlled and stirring is strengthened, the top blowing mass-energy converted gas intensity is 0.2-1.0 Nm³/min/t, the top blowing O₂ intensity is 0.8-1.8 Nm³/min/t, and the bottom blowing mass-energy converted gas intensity is 0.1-0.5 Nm³/min/t;

In the later stage of blowing, the temperature and composition of the molten pool are uniformized, further dephosphorization is carried out, the top blowing mass-energy converted gas intensity is 0.1-0.6 Nm³/min/t, the top blowing O₂ intensity is 1.0-2.0 Nm³/min/t, and the bottom blowing mass-energy converted gas intensity is 0.05-0.4 Nm³/min/t;

During charging, tapping and waiting, the top blowing mass-energy converted gas is stopped, and the bottom blowing mass-energy converted gas intensity is 0.03-0.15 Nm³/min/t, so as to protect bottom blowing elements.

The combustion improver is O₂, and the consumption of the combustion improver changes with the content of CO in the gas emitted from the dephosphorization converter, and in order to ensure sufficient mass-energy conversion of the gas, the flow ratio of O₂:CO should be kept at 0.5-1.5:1.

During the mixing process of the mass-energy converted gas and oxygen, the pressure of the mass-energy converted gas is guaranteed to be at least 0.01-0.5 MPa higher than the pressure of oxygen.

Meanwhile, the mass-energy converted gas can be provided to nitrogen sealing pipelines of the top blowing system, a dedusting system and a charging system of the converter, completely replacing N₂ for sealing of a top blowing spray gun, a dedusting smoke hood and a charging system unit of the dephosphorization converter, to prevent air from entering a flue, wherein the nitrogen sealing pipelines of the top blowing system, the dedusting system and the charging system of the converter exist on a converter in the prior art.

A device for mass-energy conversion recycling of dephosphorization converter gas for diversified blowing so as to realize efficient dephosphorization is provided. The device comprises a dephosphorization converter for duplex steelmaking 1, a first cooling device, a dedusting device and an emission chimney 5.

Wherein, the first cooling device comprises an evaporative cooling flue 201, a cooler nozzle 202 and an evaporative cooler 203 which are connected in sequence, and the dedusting device is an electrostatic precipitator 3, which comprises a gas analyzer.

The dephosphorization converter for duplex steelmaking 1 is connected with the evaporative cooling flue 201, the electrostatic precipitator 3 is connected with the evaporative cooler 203, and the emission chimney 5 is connected with the electrostatic precipitator 3; and the dephosphorization converter for duplex steelmaking 1 comprises a top blowing system 12 and a bottom blowing system 13, the top blowing system 12 and the bottom blowing system 13 respectively blow top blowing gas and bottom blowing gas from the top and bottom of the converter 1 to realize dephosphorization, and gas generated in the dephosphorization process sequentially passes through the evaporative cooling flue 201, the cooler nozzle 202, the evaporative cooler 203 and the electrostatic precipitator 3 for cooling and dedusting, and then enters a pipeline in front of the emission chimney 5.

The electrostatic precipitator 3 is connected with the emission chimney 5 through a pipeline, the pipeline is provided with a fan 4 on the side near the electrostatic precipitator 3, an emission-side bell-shaped valve 14 is arranged on the side near the emission chimney 5, and the emission-side bell-shaped valve 14 and the emission chimney 5 are provided with two switching valves 15 and 16. When the total amount of CO and CO₂ in the dephosphorization converter gas is less than 18%, the switching valve 15 enables the gas passing through the emission-side bell-shaped valve 14 to enter the emission chimney 5 and be discharged through the emission chimney 5, and when the total amount of CO and CO₂ in the gas is greater than 18%, the switching valve 16 enables the gas passing through the emission-side bell-shaped valve 14 to enter another pipeline.

The device further comprises a combustion chamber 6, a second cooling device, a compressor 8, a buffer device 11 and a mixing device 17, and the second cooling device is a gas cooler 9.

An air inlet of the combustion chamber 6 is connected with the above another pipeline, an air outlet of the combustion chamber 6 is connected with the gas cooler 9, and the gas cooler 9, the compressor 10 and the buffer device 11 are sequentially connected.

The buffer device 11 is provided with two outlets, wherein one outlet is connected with the bottom blowing system 13 and the other outlet is connected with the top blowing system 12, the top blowing system 12 is provided with the mixing device 17, and an inlet of the mixing device 17 is also connected with an oxygen supply device.

The cooled and dedusted gas enters the combustion chamber, the CO component in the emitted gas is combusted and converted into CO₂ to obtain mass-energy converted gas, the mass-energy converted gas enters the buffer device after being cooled and pressurized, then part of the mass-energy converted gas enters the bottom blowing system of the dephosphorization converter as bottom blowing gas, the other part enters the top blowing system of the dephosphorization converter as top blowing gas after being mixed with oxygen, and the mass-energy converted gas is mixed with the oxygen in the mixing device to obtain diversified gas O₂-N₂-CO₂ which enters the converter 1 through top blowing.

The mixed diversified gas O₂-N₂-CO₂ is sprayed into the dephosphorization converter 1 through a 3-7-hole supersonic top blowing spray gun, and the bottom blowing mass-energy converted gas can be blown into the dephosphorization converter 1 through 4-16 annular gap type or porous plug type or sleeve type bottom blowing elements.

The combustion chamber 6 comprises a combustion improver nozzle 601 and an ignition device, a lining of the combustion chamber is made of a refractory material, a housing is an evaporative cooling pipeline, and the evaporative cooling pipeline is connected with a steam drum 7 to recover the heat generated in the combustion process.

The combustion improver is sprayed into the combustion chamber 6 through the nozzle 601, the combustion improver is oxygen, the consumption of the combustion improver changes with the composition of the dedusted gas, and the flow ratio of O₂:CO is kept at 0.5-1.5:1, so as to ensure sufficient mass-energy conversion of the gas.

In order to monitor the composition of the gas discharged through the combustion chamber, a gas analyzer 8 is arranged at an air outlet of the combustion chamber 6.

Since the amount of oxygen in the mixing device 17 is significantly higher than that of the mass-energy converted gas during mixing, the pressure of the mass-energy converted gas compressed by the compressor 8 is 0.01-0.5 MPa higher than that of the oxygen in the oxygen supply device, so as to ensure smooth mixing of the mass-energy converted gas and oxygen in the mixing device 17.

The principle of the invention is that the smelting process of the dephosphorization converter for duplex steelmaking is a selective oxidation process of phosphorus and carbon; in order to realize "dephosphorization and carbon preservation", the top blowing O₂ flow is small and the temperature is low, and the decarbonization reaction is limited; the CO content in the gas is only 5%-30%, the CO₂ content is 10%-30%, and the heat value of the gas is low, so the gas does not have recycling economic values; the CO content is low, the gas quality is poor, and the gas does not have the value of being recycled as fuel; at present, iron and steel enterprises all adopt emission treatment for the dephosphorization converter gas, which not only wastes resources and energy, but also pollutes the environment.

According to the invention, O₂ is blown by the combustion improver nozzle arranged in the combustion chamber, so that the reaction 2CO+O₂=2CO₂ occurs, CO in low-quality dephosphorization converter gas is converted into CO₂, and the energy generated by combustion is recovered at the same time, so that mass-energy conversion is realized. The main components of the mass-energy converted gas are CO₂, N₂ and a small amount of residual O₂, wherein the content of CO₂ reaches 35% or above, and CO₂ is a low oxidative substance. At the steelmaking temperature, an oxidation reaction can occur between CO₂ and elements C, Fe, Si and Mn in molten iron, and the reaction between CO₂ and elements C and Fe is an endothermic reaction, which is beneficial to controlling the dephosphorization temperature. Meanwhile, a large number of CO bubbles generated by the reaction of CO₂ with elements in the molten pool float upwards and have strong chemical stirring force to strengthen the dynamic conditions of dephosphorization; and N₂ in the mass-energy converted gas does not react with elements in the molten pool, but the stirring in the dephosphorization molten pool can be strengthened to promote the dephosphorization reaction.

### Embodiment 2

This embodiment adopts the method and device in Embodiment 1, and the specific conditions are as follows:
For a 300 t dephosphorization converter, the change of the gas content during blowing is shown in Table 1. The instantaneous gas flow rate is 160,000-190,000 Nm³/h. After passing through the evaporative cooling flue and a dry dedusting system for cooling and dedusting, the gas enters the combustion chamber through an emission pipeline, eight combustion nozzles are used to inject the combustion improver, and the flow rate of the combustion improver varies with the composition of the dephosphorization converter gas as shown in Table 1 below.

**Table 1 Dephosphorization Converter Gas and Flow Rate of Combustion Improver**

| Blowing time (min) | Composition of dephosphorization converter gas (%) | | | | Flow rate of combustion improver (Nm³/h) |
|---|---|---|---|---|---|
| | CO | O₂ | CO₂ | N₂ | |
| 1.0 | 1.50 | 2.31 | 15.05 | 81.14 | Emission |
| 2.0 | 10.15 | 0.31 | 19.15 | 70.39 | 11177.5 |
| 3.0 | 14.56 | 0.27 | 22.5 | 62.67 | 14076.0 |
| 4.0 | 18.41 | 0.28 | 23.8 | 57.51 | 17348.5 |
| 5.0 | 21.25 | 0.25 | 19.96 | 58.54 | 19762.5 |
| 6.0 | 25.67 | 0.35 | 19.55 | 54.43 | 24369.5 |

The mass-energy converted gas is pressurized to 2.2 MPa or above by the compressor and stored in the buffer device, and the average composition comprises 39% of CO₂, 59.25% of N₂, and the balance of a small amount of residual gas. The mass-energy converted gas is blown into a diversified gas main pipe in an injection mode, and is mixed with oxygen through the gas mixing device, the evenly mixed diversified gas O₂-N₂-CO₂ is sprayed into the dephosphorization converter through a 4-hole supersonic top blowing spray gun, and the bottom blowing mass-energy converted gas is blown into the dephosphorization converter through 16 annular gap type bottom blowing elements.

The specific blowing process comprises the following steps:
In the early stage of blowing, the oxygen blowing ratio should be increased, which is conducive to the temperature rise of the molten pool and rapid slag formation, the top blowing mass-energy converted gas intensity is 0.2 Nm³/min/t, the top blowing O₂ intensity is 1.8 Nm³/min/t, the top blowing diversified gas ratio is CO₂:N₂:O₂ = 1:1.5:23, and the bottom blowing mass-energy converted gas intensity is 0.2 Nm³/min/t;

In the middle stage of blowing, it is required to strengthen the mixing in the molten pool and control the temperature of the dephosphorization molten pool, therefore, the mass-energy converted gas blowing intensity should be increased, the top blowing mass-energy converted gas intensity is 0.9 Nm³/min/t, the top blowing O₂ intensity is 0.9 Nm³/min/t, the top blowing diversified gas ratio is CO₂:N₂:O₂=1:1.5:2.6, and the bottom blowing mass-energy converted gas intensity is 0.3 Nm³/min/t;

In the later stage of blowing, the temperature and composition of the molten pool are uniformized, further dephosphorization is carried out, converted gas intensity is appropriately reduced, the top blowing mass-energy converted gas intensity is 0.4 Nm³/min/t, the top blowing O₂ intensity is 1.4 Nm³/min/t, the top blowing diversified gas ratio is CO₂:N₂:O₂=1:1.5:9, and the bottom blowing mass-energy converted gas intensity is 0.3 Nm³/min/t;

During charging, tapping and waiting, the top blowing mass-energy converted gas is stopped, and the bottom blowing mass-energy converted gas intensity is 0.05 Nm³/min/t, so as to protect bottom blowing elements.

When the method of the invention is applied to a 300 t dephosphorization converter, the mass-energy conversion amount of gas per ton of steel is 45 Nm³, 12 kg of steam can be recovered by the evaporative cooling device of the combustion chamber, thereby improving the dephosphorization rate by 7.5%, and the mass-energy converted gas of the invention can completely replace N₂ for sealing of accessory equipment of the dephosphorization converter.

## Claims

1. A method for mass-energy conversion recycling of dephosphorization converter gas for diversified blowing so as to realize efficient dephosphorization, wherein, comprising:
in a dephosphorization converter for duplex steelmaking (1), conducting cooling and dedusting on the gas emitted by the dephosphorization converter, then burning the gas by using a combustion improver to convert the CO component in the gas into CO₂, and meanwhile, recovering the heat generated by combustion, so that mass-energy conversion of the dephosphorization converter gas is realized to obtain mass-energy converted gas;
after cooling and pressurization, part of the mass-energy converted gas entering a bottom blowing system (13) of the dephosphorization converter as bottom blowing gas to realize bottom blowing stirring of the mass-energy converted gas in the converter, and the other part entering a top blowing system (12) of the dephosphorization converter as top blowing gas after being mixed with oxygen, so as to realize diversified gas O₂-N₂-CO₂ blowing dephosphorization in the converter, as a replacement for the existing way of top blowing part of O₂ and bottom blowing N₂ into the dephosphorization converter, thereby realizing recycling of the converted gas for efficient dephosphorization; wherein the process of diversified blowing for efficient dephosphorization is controlled in stages,
wherein, the combustion improver is O₂, and the consumption of the combustion improver changes with the content of CO in the gas emitted from the dephosphorization converter, and in order to ensure sufficient mass-energy conversion of the gas, the flow ratio of O₂:CO should be kept at 0.5-1.5:1.

2. The method according to claim 1, wherein, the gas flow rates in different smelting stages are different when the mass-energy converted gas is used for blowing dephosphorization, specifically:
in an early stage of blowing (blowing quantity of top blowing gas of 0-25%), the temperature of a molten pool rises due to an oxidation reaction for slagging, the top blowing mass-energy converted gas intensity is 0-0.5 Nm³/min/t, the top blowing O₂ intensity is 1.0-2.5 Nm³/min/t, and the bottom blowing mass-energy converted gas intensity is 0.05-0.3 Nm³/min/t;
in a middle stage of blowing (blowing quantity of top blowing gas of 26-85%), the intensity of the mass-energy converted gas is increased, the dephosphorization temperature is controlled and stirring is strengthened, the top blowing mass-energy converted gas intensity is 0.2-1.0 Nm³/min/t, the top blowing O₂ intensity is 0.8-1.8 Nm³/min/t, and the bottom blowing mass-energy converted gas intensity is 0.1-0.5 Nm³/min/t;
in a later stage of blowing (blowing quantity of top blowing gas of 86-100%), the temperature and composition of the molten pool are uniformized, further dephosphorization is carried out, the top blowing mass-energy converted gas intensity is 0.1-0.6 Nm³/min/t, the top blowing O₂ intensity is 1.0-2.0 Nm³/min/t, and the bottom blowing mass-energy converted gas intensity is 0.05-0.4 Nm³/min/t;
during charging, tapping and waiting, the top blowing mass-energy converted gas is stopped, and the bottom blowing mass-energy converted gas intensity is 0.03-0.15 Nm³/min/t, so as to protect bottom blowing elements.

3. The method according to claim 1, wherein, during the mixing process of the mass-energy converted gas and oxygen, the pressure of the mass-energy converted gas is guaranteed to be 0.01-0.5 MPa higher than the pressure of oxygen.

4. The method according to claim 1, wherein, the emitted gas after cooling and dedusting is combusted in a combustion chamber (6), the combustion chamber (6) comprises a combustion improver nozzle and an ignition device, a lining of the combustion chamber (6) is made of a refractory material, a housing is an evaporative cooling pipeline, and the evaporative cooling pipeline is connected with a steam drum to recover the heat generated in the combustion process.

5. The method according to claim 1, wherein, the mass-energy converted gas can be provided to nitrogen sealing pipelines of the top blowing system (12), a dedusting system and a charging system of the converter, completely replacing N₂ for sealing of a top blowing spray gun, a dedusting smoke hood and a charging system unit of the dephosphorization converter, to prevent air from entering a flue.

6. A device for mass-energy conversion recycling of dephosphorization converter gas for diversified blowing so as to realize efficient dephosphorization, the device comprising a dephosphorization converter for duplex steelmaking (1), a first cooling device, a dedusting device and an emission chimney (5); wherein the dephosphorization converter for duplex steelmaking (1) is connected with the cooling device, the dedusting device is connected with the cooling device, and the emission chimney (5) is connected with the dedusting device; the dephosphorization converter for duplex steelmaking (1) comprises a top blowing system (12) and a bottom blowing system (13); the top blowing system (12) and the bottom blowing system (13) respectively blow top blowing gas and bottom blowing gas from the top and bottom of the converter to realize dephosphorization process, and the gas generated in the dephosphorization process sequentially passes through the cooling device and the dedusting device for cooling and dedusting, and then enters a pipeline in front of the emission chimney (5); wherein,
the device further comprises a combustion chamber (6), a second cooling device, a compressor (10), a buffer device (11) and a mixing device (17);
an air inlet of the combustion chamber (6) is connected with a pipeline between the dedusting device and the emission chimney (5);
an air outlet of the combustion chamber (6) is connected with the second cooling device;
the second cooling device, the compressor (10) and the buffer device (11) are sequentially connected;
the buffer device (11) is provided with two outlets, wherein one outlet is connected with the bottom blowing system (13), and the other outlet is connected with an inlet of the mixing device (17);
the inlet of the mixing device (17) is also connected with an oxygen supply device;
the mixing device (17) is connected with the top blowing system (12);
the cooled and dedusted gas enters the combustion chamber (6), the CO component in the emitted gas is combusted and converted into CO₂ to obtain mass-energy converted gas, the mass-energy converted gas enters the buffer device (11) after being cooled and pressurized, then part of the mass-energy converted gas enters the bottom blowing system (13) of the dephosphorization converter as bottom blowing gas, and the other part enters the top blowing system (12) of the dephosphorization converter as top blowing gas after being mixed with oxygen.

7. The device according to claim 6, wherein, the combustion chamber (6) comprises a combustion improver nozzle and an ignition device, a lining of the combustion chamber (6) is made of a refractory material, a housing is an evaporative cooling pipeline, and the evaporative cooling pipeline is connected with a steam drum to recover the heat generated in the combustion process.

8. The device according to claim 6, wherein, a gas analyzer (8) is arranged at an air outlet of the combustion chamber (6).

9. The device according to claim 6, wherein, a gas analyzer (8) is arranged in the dedusting device.

## Patentansprüche

1. Ein Verfahren zur Masse-Energie-Umwandlungswiederverwertung von Entphosphorungskonvertergas für diversifiziertes Einblasen, um eine effiziente Entphosphorung zu realisieren, wobei es umfasst
in einem Entphosphorungskonverter für Duplexstahlerzeugung (1), Durchführen von Kühlung und Entstaubung des vom Entphosphorungskonverter abgegebenen Gases, dann Verbrennen des Gases unter Verwendung eines Verbrennungsverbesserers, um die CO-Komponente im Gas in CO₂ umzuwandeln, und währenddessen Rückgewinnung der durch die Verbrennung erzeugten Wärme, so dass eine Masse-Energie-Umwandlung des Entphosphorungskonvertergases realisiert wird, um ein Masse-Energie-umgewandeltes Gas zu erhalten;
nach Kühlung und Druckbeaufschlagung, ein Teil des Masse-Energie-umgewandelten Gases tritt in ein Boden-Einblassystem (13) des Entphosphorungskonverters als Boden-Einblasgas ein, um ein Boden-Einblasmischen des Masse-Energie-umgewandelten Gases in dem Konverter zu realisieren, und der andere Teil tritt in ein oberes Einblassystem (12) des Entphosphorungskonverters als oberes Einblasgas ein, nachdem er mit Sauerstoff gemischt wurde, um so Einblas-Entphosphorung mit diversifiziertem O₂-N₂-CO₂-Gas im Konverter zu realisieren, als Ersatz für die bestehende Art und Weise, einen Teil des O₂ von oben und N₂ vom Boden in den Entphosphorungskonverter einzublasen, wodurch die Wiederverwertung des umgewandelten Gases für eine effiziente Entphosphorung realisiert wird; wobei der Prozess des diversifizierten Einblasens zur effizienten Entphosphorung in Stufen gesteuert wird,
wobei der Verbrennungsverbesserer O₂ ist und der Verbrauch des Verbrennungsverbesserers sich mit dem Gehalt an CO in dem aus dem Entphosphorungskonverter abgegebenen Gas ändert, und um eine ausreichende Masse-Energie-Umwandlung des Gases sicherzustellen sollte das Strömungsverhältnis von O₂:CO bei 0,5-1,5:1 gehalten werden.

2. Das Verfahren gemäß Anspruch 1, wobei die Gasflussraten in verschiedenen Schmelzstufen unterschiedlich sind, wenn das Masse-Energie-umgewandelte Gas zur Einblasentphosphorung verwendet wird, nämlich:
in einer frühen Stufe des Einblasens (Einblasmenge des oberen Einblasgases von 0-25%) steigt die Temperatur eines Schmelzbades aufgrund einer Oxidationsreaktion zur Verschlackung, die Intensität des oberen Masse-Energie-umgewandelten Einblasgases beträgt 0-0,5 Nm³/min/t, die obere Einblas-O₂-Intensität beträgt 1,0-2,5 Nm³/min/t und die Intensität des Masse-Energie-umgewandelten Boden-Einblasgases beträgt 0,05-0,3 Nm³/min/t;
in einer mittleren Stufe des Einblasens (Einblasmenge des oberen Einblasgases von 26-85%) wird die Intensität des in Masse-Energie-umgewandelten Gases erhöht, die Entphosphorungstemperatur wird gesteuert und das Rühren wird verstärkt, die Intensität des oberen Masse-Energie-umgewandelten Einblasgases beträgt 0,2-1,0 Nm³/min/t, die obere Einblas-O₂-Intensität beträgt 0,8-1,8 Nm³/min/t, und die Intensität des Masse-Energie-umgewandelten Boden-Einblasgases beträgt 0,1-0,5 Nm³/min/t;
in einer späteren Stufe des Einblasens (Einblasmenge des oberen Einblasgases von 86-100%) werden die Temperatur und die Zusammensetzung des Schmelzbades vereinheitlicht, weitere Entphosphorung wird durchgeführt, die Intensität des oberen Masse-Energie-umgewandelten Einblasgases beträgt 0,1-0,6 Nm³/min/t, die obere Einblas-O₂-Intensität beträgt 1,0-2,0 Nm³/min/t, und die Intensität des Masse-Energie-umgewandelten Boden-Einblasgases beträgt 0,05-0,4 Nm³/min/t;
während des Beschickens, Anzapfens und Wartens wird das obere, Masse-Energie-umgewandelte Einblasgas gestoppt und die Intensität des Masse-Energie-umgewandelten Boden-Einblasgases beträgt 0,03-0,15 Nm³/min/t, um die Boden-Einblaselemente zu schützen.

3. Das Verfahren gemäß Anspruch 1, wobei während des Mischvorgangs des Masse-Energie-umgewandelten Gases und des Sauerstoffs gewährleistet ist, dass der Druck des Masse-Energie-umgewandelten Gases 0,01-0,5 MPa höher ist als der Druck des Sauerstoffs.

4. Das Verfahren gemäß Anspruch 1, wobei das abgegebene Gas nach der Kühlung und Entstaubung in einer Brennkammer (6) verbrannt wird, die Brennkammer (6) eine Verbrennungsverbesserungsdüse und eine Zündvorrichtung umfasst, eine Auskleidung der Brennkammer (6) aus einem feuerfesten Material besteht, ein Gehäuse eine Verdampfungskühlungsrohrleitung ist und die Verdampfungskühlungsrohrleitung mit einer Dampftrommel verbunden ist, um die beim Verbrennungsprozess erzeugte Wärme zurückzugewinnen.

5. Das Verfahren gemäß Anspruch 1, wobei das Masse-Energie-umgewandelte Gas Stickstoffdichtungsleitungen des oberen Einblassystems (12), einem Entstaubungssystem und einer Beschickungsanlage des Konverters zugeführt werden kann, wobei es N₂ zur Abdichtung einer oberen Einblas-Spritzpistole, einer Entstaubungs-Rauchhaube und einer Beschickungsanlageneinheit des Entphosphorungskonverters vollständig ersetzt, um den Eintritt von Luft in einen Kamin zu verhindern.

6. Eine Vorrichtung zur Masse-Energie-Umwandlungswiederverwertung von Entphosphorungskonvertergas für diversifiziertes Einblasen, um eine effiziente Entphosphorung zu realisieren, die Vorrichtung umfassend einen Entphosphorungskonverter für Duplexstahlerzeugung (1), eine erste Kühlvorrichtung, eine Entstaubungsvorrichtung und einen Emissionskamin (5); wobei der Entphosphorungskonverter für Duplexstahlerzeugung (1) mit der Kühlvorrichtung verbunden ist, die Entstaubungsvorrichtung mit der Kühlvorrichtung verbunden ist und der Emissionskamin (5) mit der Entstaubungsvorrichtung verbunden ist; der Entphosphorungskonverter für Duplexstahlerzeugung (1) umfasst ein oberes Einblassystem (12) und ein Boden-Einblassystem (13); das obere Einblassystem (12) und das Boden-Einblassystem (13) blasen jeweils oberes Einblasgas und Boden-Einblasgas von der Oberseite und dem Boden des Konverters ein, um Entphosphorungsprozess zu realisieren, und das in dem Entphosphorungsprozess erzeugte Gas durchläuft nacheinander die Kühlvorrichtung und die Entstaubungsvorrichtung zum Kühlen und Entstauben und tritt dann in eine Rohrleitung vor dem Emissionskamin (5) ein; wobei
die Vorrichtung ferner eine Brennkammer (6), eine zweite Kühlvorrichtung, einen Verdichter (10), eine Puffervorrichtung (11) und eine Mischvorrichtung (17) umfasst;
ein Lufteinlass der Brennkammer (6) mit einer Rohrleitung zwischen der Entstaubungsvorrichtung und dem Emissionskamin (5) verbunden ist;
ein Luftauslass der Brennkammer (6) mit der zweiten Kühlvorrichtung verbunden ist;
die zweite Kühlvorrichtung, der Verdichter (10) und die Puffervorrichtung (11) hintereinander geschaltet sind;
die Puffervorrichtung (11) mit zwei Auslässen versehen ist, wobei ein Auslass mit dem Boden-Einblassystem (13) verbunden ist und der andere Auslass mit einem Einlass der Mischvorrichtung (17) verbunden ist;
der Einlass der Mischvorrichtung (17) auch mit einer Sauerstoffzufuhrvorrichtung verbunden ist;
die Mischvorrichtung (17) mit dem oberen Einblassystem (12) verbunden ist;
das gekühlte und entstaubte Gas in die Brennkammer (6) eintritt, die CO-Komponente in dem abgegebenen Gas verbrannt und in CO₂ umgewandelt wird, um Masse-Energie-umgewandeltes Gas zu erhalten, das Masse-Energie-umgewandelte Gas in die Puffervorrichtung (11) eintritt, nachdem es gekühlt und mit Druck beaufschlagt wurde, dann ein Teil des Masse-Energie-umgewandelten Gases in das Boden-Einblassystem (13) des Entphosphorungskonverters als Boden-Einblasgas eintritt und der andere Teil in das obere Einblassystem (12) des Entphosphorungskonverters als oberes Einblasgas eintritt, nachdem es mit Sauerstoff gemischt wurde.

7. Die Vorrichtung gemäß Anspruch 6, wobei die Brennkammer (6) eine Verbrennungsverbesserungsdüse und eine Zündvorrichtung umfasst, eine Auskleidung der Brennkammer (6) aus einem feuerfesten Material besteht, ein Gehäuse eine Verdampfungskühlungsrohrleitung ist und die Verdampfungskühlungsrohrleitung mit einer Dampftrommel verbunden ist, um die beim Verbrennungsprozess erzeugte Wärme zurückzugewinnen.

8. Die Vorrichtung gemäß Anspruch 6, wobei an einem Luftauslass der Brennkammer (6) ein Gasanalysator (8) angeordnet ist.

9. Die Vorrichtung gemäß Anspruch 6, wobei in der Entstaubungsvorrichtung ein Gasanalysator (8) angeordnet ist.

## Revendications

1. Procédé de recyclage par conversion en énergie de masse destiné à un gaz de convertisseur de déphosphoration pour un soufflage diversifié pour réaliser une déphosphoration efficiente, dans lequel le procédé comprend les étapes de :
effectuer un refroidissement et un dépoussiérage du gaz émis par le convertisseur de déphosphoration dans un convertisseur de déphosphoration pour la fabrication de l'acier duplex (1), ensuite brûler le gaz en utilisant un améliorant de combustion pour convertir le composant de CO dans le gaz en CO₂ et entre-temps récupérer la chaleur générée par la combustion, de sorte qu'une conversion en énergie de masse du gaz de convertisseur de déphosphoration est réalisée pour obtenir un gaz converti en énergie de masse ;
après un refroidissement et une pressurisation, faire entrer une partie du gaz de conversion en énergie de masse dans un système de soufflage par le fond (13) du convertisseur de déphosphoration comme gaz de soufflage par le fond pour réaliser un brasage par soufflage du fond du gaz de conversion en énergie de masse dans le convertisseur, et faire entrer l'autre partie du gaz dans un système de soufflage par le haut (12) du convertisseur de déphosphoration comme gaz de soufflage par le haut après avoir été mélangé avec de l'oxygène,
de sorte qu'on réalise une déphosphoration par soufflage de gaz diversifié O₂-N₂-CO₂ dans le convertisseur, en tant que remplacement de la manière existante de souffler O₂ par le haut et souffler N₂ par le fond dans le convertisseur de déphosphoration, et ainsi réaliser un recyclage du gaz de conversion pour une déphosphoration efficiente ; dans lequel le procédé de soufflage diversifié pour une déphosphoration efficiente est commandé par étapes,
dans lequel l'améliorant de combustion est O₂ et la consommation de l'améliorant de combustion change en fonction de la teneur en CO dans le gaz émis par le convertisseur de déphosphoration, et pour assurer une conversion suffisante en énergie de masse du gaz, le rapport de débit de O₂ : CO devrait être maintenu à 0,5 - 1,5 : 1.

2. Procédé selon la revendication 1, dans lequel les taux de débit de gaz dans des étapes différentes de fusion sont différents, si le gaz de conversion en énergie de masse est utilisé pour une déphosphoration par soufflage dans une phase initiale de soufflage (quantité de soufflage du gaz de soufflage par le haut de 0-25%), la température d'un bain de fusion augmente à cause d'une réaction d'oxydation pour la scorification , l'intensité de gaz de conversion en énergie de masse pour le soufflage par le haut est 0-0,5 Nm³/min/t, l'intensité de O₂ pour le soufflage par le haut est 1,0-2,5 Nm³/min/t et l'intensité de gaz de conversion en énergie de masse pour le soufflage par le fond est 0,05-0,3 Nm³/min/t ; dans une étape intermédiaire de soufflage (la quantité de soufflage du gaz de soufflage par le haut est comprise entre 26 et 85%, l'intensité du gaz de conversion en énergie de masse est augmentée, la température de déphosphoration est commandée et le brassage est renforcé, l'intensité du gaz de conversion en énergie de masse pour le soufflage par le haut est 0,2-1,0 Nm³/min/t, l'intensité de O₂ pour le soufflage par le haut est 0,8-1,8 Nm³/min/t et l'intensité de gaz de conversion en énergie de masse pour le soufflage par le fond est 0,1-0,5 Nm³/min/t;
dans une étape ultérieure de soufflage (la quantité de soufflage du gaz de soufflage par le haut est comprise entre 86 et 100%), la température et la composition du bain de fusion sont uniformisées, une autre déphosphoration est effectuée, l'intensité du gaz de conversion en énergie de masse pour le soufflage par le haut est 0,1-0,6 Nm³/min/t, l'intensité de O₂ pour le soufflage par le haut est 1,0-2,0 Nm³/min/t et l'intensité de gaz de conversion en énergie de masse pour le soufflage par le fond est 0,05-0,4 Nm³/min/t ;
pendant le chargement, le taraudage et l'attente le gaz de conversion en énergie de masse pour le soufflage par le haut est arrêté et l'intensité de gaz de conversion en énergie de masse pour le soufflage par le fond est 0,03-0,15 Nm³/min/t pour protéger des éléments de soufflage par le fond.

3. Procédé selon la revendication 1, dans lequel il est assuré pendant le processus de mélange du gaz de conversion en énergie de masse avec l'oxygène, que la pression du gaz de conversion en énergie de masse est plus élevée de 0,01-0,5 MPa que la pression de l'oxygène.

4. Procédé selon la revendication 1, dans lequel après le refroidissement et le dépoussiérage le gaz émis est brûlé dans une chambre de combustion (6), la chambre de combustion (6) comprenant une buse d'améliorant de combustion et un dispositif d'allumage, un revêtement de la chambre de combustion (6) étant fabriqué en un matériau réfractaire, un boîtier étant une conduite de refroidissement par évaporation et la conduite de refroidissement par évaporation étant reliée à un ballon de vapeur pour récupérer la chaleur générée dans le procédé de combustion.

5. Procédé selon la revendication 1, dans lequel le gaz de conversion en énergie de masse peut être alimenté à des conduites d'étanchéité à l'azote du système de soufflage par le haut (12), à un système de dépoussiérage et à un système de chargement du convertisseur, en remplaçant le N₂ complètement pour sceller un pistolet de pulvérisation à soufflage par le haut, une hotte de fumée de dépoussiérage et une unité de système de chargement du convertisseur de déphosphoration pour empêcher l'air d'entrer dans un conduit d'évacuation.

6. Dispositif de recyclage par conversion en énergie de masse destiné à un gaz de convertisseur de déphosphoration pour un soufflage diversifié pour réaliser une déphosphoration efficiente, le dispositif comprenant un convertisseur de déphosphoration pour la fabrication de l'acier duplex (1), un premier dispositif de refroidissement, un dispositif de dépoussiérage et une cheminée d'émission (5) ; dans lequel le convertisseur de déphosphoration pour la fabrication de l'acier duplex (1) est relié au dispositif de refroidissement, le dispositif de dépoussiérage est relié au dispositif de refroidissement et la cheminée d'émission (5) est raccordée au dispositif de dépoussiérage, le convertisseur de déphosphoration pour la fabrication de l'acier duplex (1) comprend un système de soufflage par le haut (12) et un système de soufflage par le fond (13) ; le système de soufflage par le haut (12) et le système de soufflage par le fond (13) soufflant respectivement du gaz de soufflage par le haut et du gaz de soufflage par le fond à partir du haut et à partir du fond du convertisseur pour effectuer le procédé de déphosphoration, et le gaz généré dans le procédé de déphosphoration passe de manière séquentielle à travers le dispositif de refroidissement et le dispositif de dépoussiérage pour être refroidi et dépoussiéré et entre ensuite dans un conduit devant la cheminée d'émission (5) ; dans lequel
le dispositif comprend en outre une chambre de combustion (6), un deuxième dispositif de refroidissement, un compresseur(10), un dispositif tampon (11) et un dispositif de mélange (17) :
une entrée d'air de la chambre de combustion (6) est reliée à un conduit entre le dispositif de dépoussiérage et la cheminée d'émission (5) ;
une sortie d'air de la chambre de combustion (6) est reliée au deuxième dispositif de refroidissement ;
le deuxième dispositif de refroidissement, le compresseur (10) et le dispositif tampon (11) sont reliés de manière séquentielle,
le dispositif tampon (11) est muni de deux sorties, dans lequel une sortie est reliée au système de soufflage par le fond (13) et l'autre sortie est reliée à une entrée du dispositif de mélange (17) ;
l'entrée du dispositif de mélange (17) est aussi reliée à un dispositif d'alimentation en oxygène ;
le dispositif de mélange (17) est relié au système de soufflage par le haut (12) ; le gaz refroidi et dépoussiéré entre dans la chambre de combustion (6), le composant CO dans le gaz émis est brûlé et converti en CO₂ pour obtenir du gaz de conversion en énergie de masse, le gaz de conversion en énergie de masse entre dans le dispositif tampon (11) après avoir été refroidi et pressurisé, ensuite une partie du gaz de conversion en énergie de masse entre dans le système de soufflage par le fond (13) du convertisseur de déphosphoration comme gaz de soufflage par le fond, et l'autre partie entre dans le système de soufflage par le haut (12) du convertisseur de déphosphoration comme gaz de soufflage par le haut après avoir été mélangé avec de l'oxygène.

7. Dispositif selon la revendication 6, dans lequel la chambre de combustion (6) comprend une buse d'améliorant de combustion et un dispositif d'allumage, un revêtement de la chambre de combustion (6) est fabriqué en un matériau réfractaire, un boîtier est une conduite de refroidissement par évaporation et la conduite de refroidissement par évaporation est reliée à un ballon de vapeur pour récupérer la chaleur générée dans le procédé de combustion.

8. Dispositif selon la revendication 6, dans lequel un analyseur de gaz (8) est disposé à une sortie d'air de la chambre de combustion (6).

9. Dispositif selon la revendication 6, dans lequel un analyseur de gaz (8) est disposé dans le dispositif de dépoussiérage.
